# EUROPEAN PATENT SPECIFICATION

(11) **EP 3 034 925 B1**
(45) Date of publication and mention of the grant of the patent: **26.12.2018**
(21) Application number: 14836726.1
(22) Date of filing: 30.06.2014
(51) Int. Cl.: F16L 58/02, F16L 13/02, F16L 58/18, C23C 22/00

(54) **METHOD FOR PROTECTING A WELDED JOINT BETWEEN PIPES HAVING AN INTERIOR COATING**
VERFAHREN ZUM SCHUTZ EINER SCHWEISSVERBINDUNG ZWISCHEN ROHREN MIT INNENBESCHICHTUNG
PROCÉDÉ DE PROTECTION DU RACCORD SOUDÉ DE TUBES AVEC UN REVÊTEMENT INTERNE

(30) Priority: 13.08.2013 RU 2013137799
(43) Date of publication of application: 22.06.2016
(73) Proprietor: Chuiko, Aleksandr Georgievich, Moscow 117420 (RU)
(72) Inventor: CHUYKO, Anastasia Aleksandrovna, 117420 Moscow (RU); CHUIKO, Aleksandr Georgievich, 117420 Moscow (RU)
(74) Representative: Einsel, Martin
(86) International application number: PCT/RU2014/000477
(87) International publication number: WO 2015/023211

(56) References cited:
- RU-C1- 2 388 961
- RU-C2- 2 300 045
- RU-U1- 115 861
- US-A1- 2002 038 954
- US-A1- 2002 038 954
- US-A1- 2006 145 479
- US-A1- 2007 284 872

## Description

### FIELD OF TECHNOLOGY

The invention refers to the construction of pipelines and can be used for purposes of anti-corrosion protection of inner welded joints of pipes with an inside protective coating.

### STATE OF THE ART

A state-of-the-art method for inside anti-corrosion protection of welded joints of pipes with an inside protective coating is known in the literature which comprises a preliminary cleaning of the welded-joint zone and adjacent areas of the inside protective coating, application of an adhesive compound resistant to corrosive environment onto a bandage, formation of a protective bandage belt after making a welded joint by means of introduction of the bandage into the inner space of the pipe with subsequent pressing of the bandage to the inner surface of the welded-joint zone, and solidification of the adhesive compound in the process of heating. As the bandage, a sealing fiber-reinforced film liner is used. It is made of corrosion-resistant materials and comprises a film impermeable to corrosive environments and doubled on both surfaces with an adhesively bonded layer made of a fibrous material impregnated in a vacuum chamber with solvent-free liquid binding agent whose chemical formula is very similar to that of the pipe coating material and capable of forming stable bonding to the material of the inside protective coating of the pipes. The protective bandage belt is formed by means of pressing the bandage to the inner surface of the welded ends of the pipes with partial overlapping of the inside protective coating of the pipes (RU 2328651 C1, published 10.07.2008 [1]). The method has the following drawbacks:
1) In the process of insulation of such welded joint, which comprises the inflation of the elastic element of the expandable device with compressed air, there arises an elevated risk of a puncture of the airtight polyethylene/polypropylene bandage film by burrs and/or icicles that appear at the joint root in the process of welding. Therefore, one needs to implement special, rather laborious measures aimed at prevention or removal of such burrs and/or icicles in the welded joint zone.
2) It is not feasible to insulate hardly accessible and inaccessible inner welded joints, for example, in the course of making large-sized pipe strings, offsets, bends, joints in cases of repairing local pipeline areas etc.
3) The time of pipeline construction grows considerably due to the impossibility of performing assembly & welding operations before the full completion of insulation and visual control of the quality of the last welded joint.
4) The visual quality control for bandage application does not allow controlling the airtightness of welded-joint insulation, detecting punctures of the sealing film by burrs or icicles, or other micro-defects of anti-corrosion protection in the welded-joint zone.

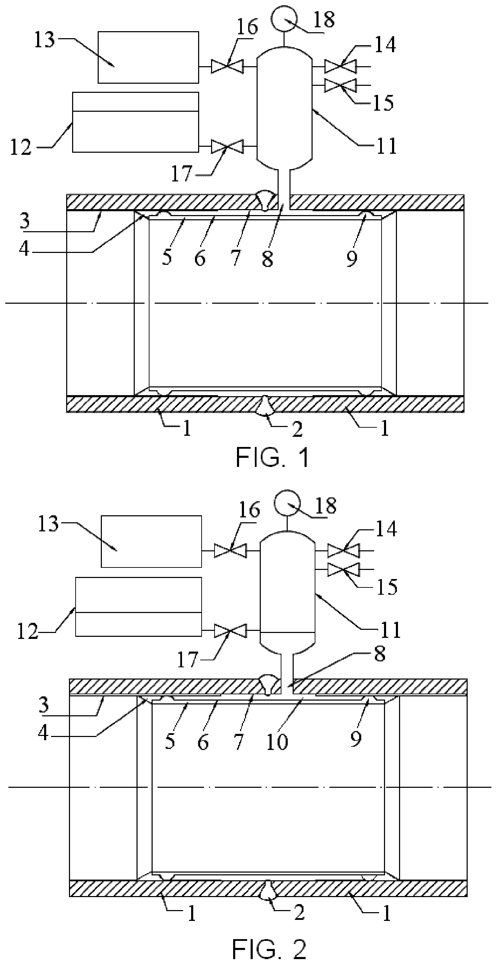

A Butler (US) patented method for expanded-end connection of pipes with an inside anti-corrosion epoxy coating is known in the literature. To make an expanded-end connection, ends of the pipes are subjected to plastic deformation prior to application of an anti-corrosion epoxy coating. At one end of the pipe, a flaring is formed by means of the cold-expansion method with the help of a punch. The other end of the pipe is subjected to plastic squeezing using a die to achieve a shape that allows a sufficiently firm contact with the inner surface of the flaring in the case of coercive matching with a required effort. To ensure the tightness of the expanded-end connection, a sealant agent is applied onto the matched surfaces of the pipe ends (V.N. Protasov. Analysis of deficiencies in current technologies for connection of pipes with an inside epoxy coating when constructing oilfield pipelines, and advantages of welded joints with an inside anti-corrosion insulation of the weld with a banding. Territorii Neftegaz Journal. March 2009, p.21-22, fig.2 [2]). This method has the following deficiencies:
1) The need of extra process operations (prior to application of the protective coating) using some specialized equipment to provide the required profiling of the end portions of each pipe, which increases significantly the cost of the pipes with an inside coating in the case of the given method for their connection.
2) The need to employ expensive special mechanized devices for coercive assembling of the expanded-end connection in field conditions.
3) At the majority of enterprises involved in insulation of oil and gas pipelines with polymer coatings, including pipe plants, an inside coating is applied onto the pipe with even ends, to which the Butler method for expanded-end pipe connection is not applicable.
4) There are also no data on conservation of cold brittleness of the welded joint after the formation of the expanded end by means of plastic deformation on welded pipes, which is of particular significance for construction of oil and gas pipelines in the Far North.

Another method for protection of a welded joint for fluid transport pipes is disclosed in US 2002/0038954 A1. The protected welded joint will be implemented at the ends of pipe segments to be welded together. The welded joint area is provided with an internal annular sleeve. The sleeve is laminar and tubular and made of stainless steel and has both ends curved outward, forming an arched rim with maximum diameter when adjusted corresponds to the internal diameter of each pipe segment. At curved ends of each sleeve there are individual annular containment seals.

Another type of pipes including an internal liner is disclosed in US 2007/0284872 A1. Two pipe elements have internal liners of plastic material, the pipe elements being assembled end to end. The ends of the two pipe elements are welded together and the ends of the internal liners of plastic material of each of the pipe elements are joined together by means of a tubular junction sleeve. Said sleeve is made of material that withstands corrosion and that cooperate with the ends of the liners by mutual engagement via a notched surface. Said liner ends presenting reduced thickness and being bonded against the steel wall of said pipe by adhesive.

Another method is known of the Tuboscope-Vetco company (USA) (V.N.

Protasov. Analysis of deficiencies in current technologies for connection of pipes with an inside epoxy coating when constructing oilfield pipelines, and advantages of welded joints with an inside anti-corrosion insulation of the weld with a banding. Territorii Neftegaz Journal. March 2009, p.21-22, fig.1 [3]). The method of inside anti-corrosion protection of welded connection of pipes with an inside protective coating comprises placement of a steel liner coaxially inside the pipes to be joined, with formation of annular cavities and gaps between the outer surface of the liner and the inside surface of the welded pipe joint (to be insulated) with adjacent coating-protected areas, as well as sealing-off of the annular cavity at liner ends. A sealant agent is used to seal off the gap between the outer surface of the protective liner and the inside pipe coating. The sealant agent is applied onto the inside coating of the pipe ends to be attached together prior to placement of the protective liner. When the latter is being put into the inside space of the pipes to be connected together, the rubber rings with an annular section placed in special grooves on the outer surface of the protective liner move the sealant agent along the axial direction, which ensures the formation of sealing beads in front of the protective-liner ends. In the central part of the protective liner, on its outer surface, a special groove is provided, which enables an air layer between the liner and the inside surface of the pipes being connected in the area of welding, and hence prevention of heat-induced decay of the protective coating of the liner. For the same purpose, a spacer made of a special heat-resistant cloth with low heat conductivity is placed on the surface of the protective-liner groove. To ensure the positioning of the liner relative to the welded joint, at the center of the liner groove three radial thin steel petals are welded, which are positioned between the ends of the pipes to be welded and are meant to form an organic whole with the welded joint after the welding.

The known method and connection [3] suffer from the following shortcomings:
1) Difficulties with achieving the airtightness of the non-uniform and rather sizable gap between the protective liner and the inside surface of the pipe ends to be welded together, which results from a pronounced out-of-roundness of these pipes.
2) Reduction in the pipeline's flow area at sections with the protective liners installed, which leads to considerable amounts of solid depositions of substances precipitating in the course of fluid product transportation through the pipeline, and complicates the inside cleaning of the pipeline with the help of conventional mechanical methods, e.g. pigs.
3) Poorly feasible control of airtightness of the gap between the protective liner and the inside surface of the pipes welded together in the process of construction of the pipeline.
4) Rather long welding operation due to necessity to observe the gap between the pipe ends while welding to prevent squeezing-out of the sealant agent by gases produced in the process of welding.

The closest method to the proposed one is that described by V.N. Protasov for inside liner-type anti-corrosion protection of welded connections of tubular formed components with an inside anti-corrosion protection (RU 2388961 C1, published 10.05.2010 [4]), according to which: adapters with a flaring at the free end, having a transverse threaded hole in the central part are welded to ends of tubular formed components to be welded together; a protective anti-corrosion coating is applied onto the inside surface of each formed component with the welded adapter; a sealant layer is applied onto the area of the adapter's inside surface adjacent to the inner ledge of the adapter; a protective liner with sealing rings put in grooves made on the protective liner's outer surface end parts and with a one more groove made in between the above grooves and an insulated spacer made of a heat-resistant heat-insulating cloth is placed in the inside cavity of the adapter liners to be connected together, to allow formation of an annular cavity between the outer surface of the heat-insulating spacer and the inside surface of the expanded part of the adapters; the adapters of the pipes are welded together; the set of tubular formed components so made is pressurized with water to control the tightness of the inside liner anti-corrosion protection of the welded joint, with subsequent placement of threaded plugs in the threaded holes. To raise the bearing capacity of the protective liner and in cases of leaks detected, the annular cavity is filled with a sealant agent (with a high-modulus filler) via the threaded hole of an adapter until the sealant agent appears in the threaded hole of the other adapter.

The known method suffers from the complexity due to the necessity to weld the adapters to the pipes being joined, which results from that the protective liner reduces the inner section of the pipes and enhances the hydraulic resistance in the welded-joint zone.

Additionally, pipes often feature a pronounced degree of out-of-roundness and/or diameter scatter, which complicates the pressurization of a non-uniform and sizable gap between the protective liner and the inside surface of the pipe ends to be welded together.

### SUMMARY OF THE INVENTION

The objective of the invention proposed herein is to raise the reliability and service life of anti-corrosion protection of pipelines' joint welds concurrently with streamlining the technology for insulation of such welded joints.

This objective is achieved using the method for inside anti-corrosion protection of welded joints of pipes with an interior protective coating, which comprises: placement of a protective liner coaxially inside the pipes to be joined, with formation of an annular cavity between the outer surface of the liner and the inside surface of the weld joint of the pipes to be insulated with adjacent coating-protected areas; welding of the pipe ends; sealing-off of the annular cavity at liner edges; filling of the annular cavity with a liquid sealant agent via at least one process hole in one or both pipes with subsequent polymerization of the agent, characterized in that, prior to the placement of the protective liner, it is plastically deformed by means of expanding the liner parts to ensure matching the shape and internal diameter of each part of the liner to the shape and internal diameter of the opening of respective pipe in the area of the joint, taking into account the mounting gap between them and the thickness of the inside protective coating, and the placement of the protective liner is effected in the form of inserting one part of the liner into one pipe until it gets rested against a sealant applied onto the inside surface of the first pipe, and then pushing the second pipe onto the other part of the protective liner until it gets rested against a sealant on the inside surface of the second pipe.

Also, the annular cavity is filled with the liquid sealant material by means of evacuating the annular cavity and subsequent feeding of said material therein, and then exposing it to atmospheric or excessive pressure.

In a particular embodiment, when the protective liner is placed, a steel annular cushion is also arranged in between the steel liner and the weld joint, the outer surface of the cushion being in contact with the weld joint surface and having projections on its inner surface that contact to the outer surface of the steel liner, and these projections are welded to the steel annular cushion when welding the pipe ends together.

Additionally, one can use either the protective liner with annular projections on the outer surface of its end parts or, when performing the plastic deformation, make annular projections on the outer surface of its end parts.

In a particular embodiment, prior to placement of the steel liner, a reinforcing, easily impregnable material, resistant to corrosive environments, can be arranged on the outer surface of the liner in between the annular projections.

Besides, it is expedient to control the airtightness of the weld joint insulation prior to and after the filling of the annular cavity with the liquid sealant material by means of evacuation and subsequent assessment of the rate of air/gas leakage into the annular cavity.

Also, the protective liner is made of stainless steel and has a wall thickness ranging from 0.1 to 6.0 mm.

The essence of the proposed method consists in using a thin-wall protective liner, preferably made of stainless steel with a wall thickness ranging within 0.1 - 6 mm, its adjustment to geometric dimensions of the ends of both pipes to be joined by means of plastic deformation, placing the so adjusted thin-wall steel liner coaxially inside the pipes being connected with reduction in the volume of annular cavities and gaps due to reduction of gaps between the pipes and the outer surface of the protective liner, which is achieved through adjustment of the protective liners to interior geometric parameters of the pipes being attached.

When using a thin-wall liner, on its outer surface and in the center of the liner, immediately in the zone of weld joint root, an additional steel split or continuous ring that functions as a cushion for the formation of the weld joint root is arranged. In the process of welding the joint, the steel annular cushion is welded to the pipes being joined to form a monolithic joint. The steel annular cushion averts non-controlled spreading of a liquid metal in the annular cavity and protects reliably, in the course of welding, the thin-wall protective liner from a burn-through.

On the surface of the annular cushion facing the outer surface of the protective liner, projections can be made in the form of points, intermittent reinforcement ribs etc. A multifold reduction in the surface of contact between the annular cushion and the protective liner leads concurrently to a multifold drop in thermal flux from the annular cushion to the protective liner, thereby averting the heatup of the sealant material to a critical point and depressurization of the sealed ends of the protective liner with the insulated surface of the welded joint. Also, a guaranteed gap is formed between the annular cushion and the protective liner, which, once the welded joint's annular cavities and gaps are filled with a liquid sealing compound, secures unhampered filling of the whole annular cavity with the sealant agent.

The technical effect of the method proposed consists in the following: an essential reduction in the impact of inside geometry violations, in particular, the degree of out-of-roundness of the pipes used and a wide scatter of internal diameters of the pipes, upon quality and laboriousness of insulation of pipeline weld joints; an essential reduction in material consumption for the protective liner owing to using a thin-wall liner capable of undergoing plastic deformation in the process of pipeline construction; reduction in consumption of sealant material owing to a lesser volume of the annular cavity between the protective liner and the pipes to be joined.

### LIST OF FIGURES

The essence of the invention is illustrated with the help of figures below, where Figs. 1-4 provide a schematic presentation of the stages of the method proposed:
Fig.1 and Fig.2 - with supply of the sealant agent via a vacuum reservoir;
Fig.3 and Fig.4 - with supply of the sealant agent via an extra opening in the pipe (vacuum infusion method).

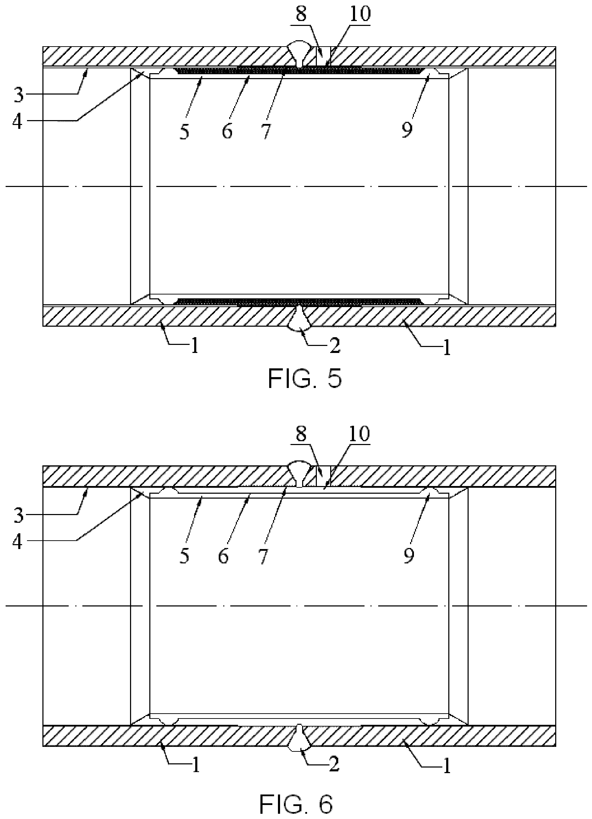

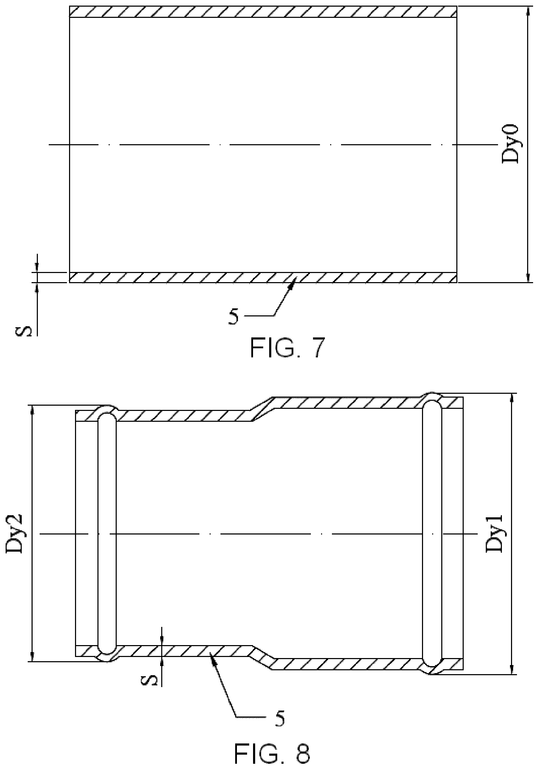

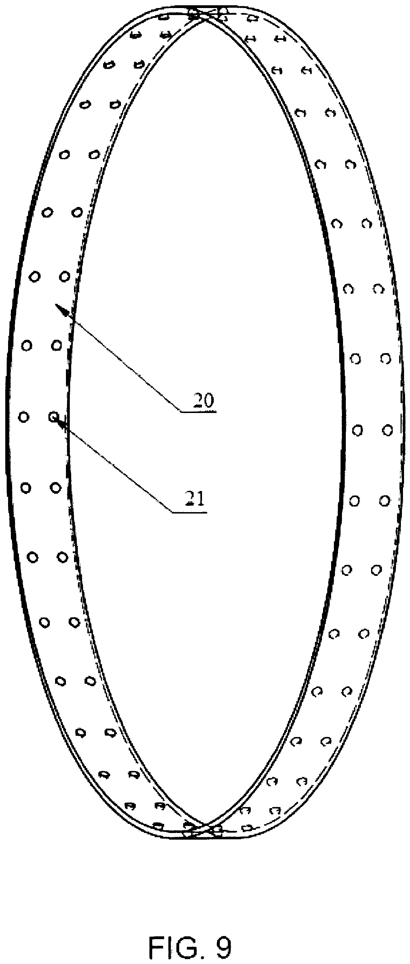

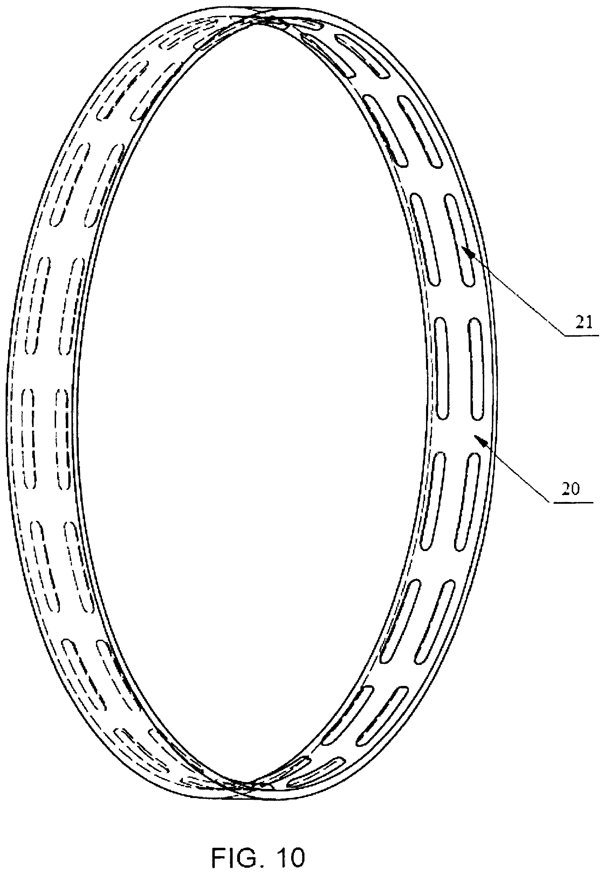

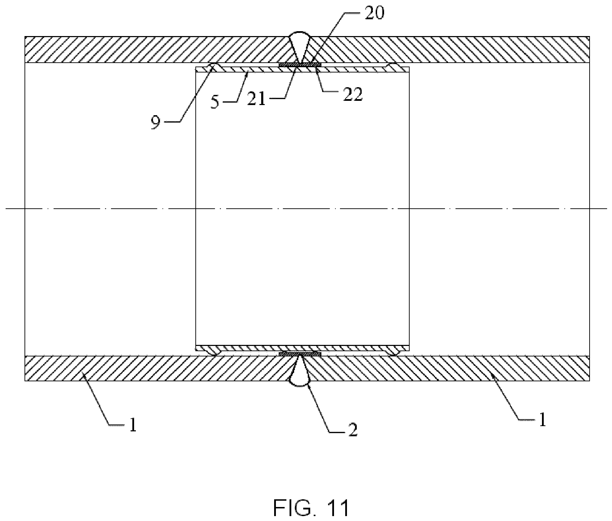

In Fig.5 and Fig.6, a welded joint with and without a reinforcing material respectively is displayed. In Fig.7, a thin-wall protective liner is shown in its initial condition, prior to its adjustment to interior geometric parameters of the pipes to be joined. In Fig.8, the thin-wall protective liner is shown after its adjustment to interior geometric parameters of the pipes to be joined. In Fig.9, the annular cushion with point-like projections is displayed. Fig. 10 shows the annular cushion with projections in the form of intermittent reinforcement ribs. In Fig.11, the diagram of welded-joint insulation with the help of the annular cushion is shown.

### PARTICULAR EMBODIMENTS OF THE INVENTION

The welded joint of pipes with inside protective coating 3 (Figs. 1-4) achieved by means of the method described herein comprises thin-wall stainless steel liner 5 placed coaxially inside connected pipes 1 so that a narrow annular cavity is formed between outer surface 6 of liner 5 and inside surface 7 (to be insulated) of the welded joint of the pipes, with adjacent coating-protected areas. The annular cavity is filled, via process hole 8, with polymerized sealant material 10 resistant to corrosive environments. Thin-wall liner has annular projections 9 on the outer surface of its end parts. As an option, reinforcing material 10 (see F.5) impregnated with polymerized sealant material resistant to corrosive environments can be placed in the annular cavity. Sealing-off of welded joint 2 is also ensured through sealing-off of the annular cavity by sealant agent 4 applied as a continuous annulus along the entire perimeter of the pipe at each end of liner 5. In accordance with the method proposed, the thickness of the wall of protective liner 5 made of stainless steel ranges within 0.1 - 6 mm. In the upper wall thickness range, protective liner 5 is insensitive to a burn-through in the course of joint welding. Increasing the wall thickness to values exceeding 6 mm is inexpedient from the economic viewpoint since it does not result in improvement of functional characteristics of the protective liner. On the contrary, in the case of an excessively thick wall the deformation capacity of liner 5 worsens considerably, which complicates its adjustment to geometric parameters of the pipe ends. The choice of a liner 5 wall thickness somewhere within the upper range of values is determined by the design of the welded joint to be insulated, namely, use of an annular cushion reinforcing the heat-resistant material and special welding equipment, or special technology measures that allow welding without outflow of molten metal from the molten pool or a burn-through of the liner.

At wall thickness values of less than 0.1 mm, the stiffness of liner 5 becomes unsatisfactory even at short diameters of the liner. Additionally, at lesser wall thickness values the protective properties of liner 5 reduce to a critical level. A minimal wall thickness for protective liner 5 can be chosen on condition of using, for welded-joint sealing purposes, reinforcing heat-resistant material 10 (Fig.5) and annular cushion 4 (Fig.11). In case protective liners 5 with a minimal wall thickness are employed, the heat-resistant reinforcing material in combination with annular cushion 4 protects reliably the thin wall of liner 5 from burn-through in the course of welding. The impact of vacuum upon the wall of protective liner 5 during the sealing-off of the annular cavity averts the loss of stability of the shape of thin-wall liner 5. When using liners 5 with a wall thickness within the lower range of values, the use of excessive pressure to act upon liquid sealant material 10 is inadmissible in the process of sealing-off of the welded-joint annular cavity.

The proposed method is implemented as follows.

In the initial state, thin-wall liner 5 (Fig.7) has the form of a cylinder with outer diameter D_{yo} and wall thickness S. This being the case, the outer diameter of protective liner 5 does not exceed the minimally allowable internal diameter of pipes 1 to be joined (taking into account the maximal permissible departures of their geometric parameters). Then, perimeters of annular holes at ends of both pipes 1 to be joined (internal diameters) are measured. When doing so, maximally accurate account of actual internal geometric parameters of pipes 1 (internal diameter and out-of-roundness of the pipes) is provided. Further, both parts of the thin-wall liner are expanded by means of plastic deformation (Fig.8). In the process of such deformation, at the ends of liner 5, on their outer surface, annular projections (reinforcement ribs) can be formed. One part of liner 5 is expanded to diameter D_{y1}. In such a case, the diameter D_{y1} is derived from the perimeter of the first pipe 1 to be joined, taking into account the required mounting gap between liner 5 and the inside surface of pipe 1 and the thickness of inside protective coating 3 of the pipes. The minimum mounting gap shall be no less than 0.1 mm per side. It is due to the minimally allowable thickness of the adhesive layer (sealant layer). When determining the mounting gap, the following is also taken into consideration: condition of the inside surface of the pipes to be connected (curvature of the inside surface and availability of factory-made longitudinal weld joints); availability and thickness of the annular cushion; availability and thickness of the reinforcing material; penetrability and viscosity of the sealant agent employed.

The other part of liner 5 is expanded to diameter D_{y2} derived from the perimeter of the actual opening in second pipe 1 taking into account the mounting gap and the thickness of inside protective coating 3 of the pipes. Such shaping of thin-wall liner 5 parts ensures matching of liner 5 ends to actual interior dimensions of pipes 1 (to be joined) with minimal annular gaps between the outer surface of liner 5 and the inside surface of pipe 1. In the case of any out-of-roundness/ellipticity of the pipes in question prior to the assembling, thin-wall protective liner 5 is deformed to a shape matching that of both pipe ends to be joined. Owing to good flexibility and resilience of the thin-wall protective liner, the operation of plastic deformation of the liner is an easily feasible one.

One part of protective liner 5 so prepared is introduced into fixed pipe 1 until it gets rested against sealant 4 applied onto the inside surface of pipe 1. Second pipe 1 is pushed onto the other part of protective liner 5 until it gets rested against sealant 4 applied inside the pipe. Ends of liner 5 are sealed off. After that, the joint of pipes 1 is welded.

When injecting the sealant material via vacuum reservoir 11 (see Figs. 1 and 2), vacuum reservoir 11 is connected to process hole 8 of welded joint 2. More than one hole 8 made in either one pipe 1 or both of them can be used. Vacuum reservoir 11 is connected, through stop valves 16, with vacuum pump 13 and tank 12 with the sealant material. Additionally, vacuum gauge 18 and vacuum break valve 14 are connected to vacuum reservoir 11. For visual inspection purposes, vacuum reservoir 11 has a sight hole. Vacuum reservoir 11 is placed above the highest point of weld joint 2 to be insulated. Via process hole 8, vacuum in annular gaps and cavities is achieved by means of vacuum pump 13. For some time, valve 16 that connects vacuum reservoir 11 to vacuum pump 13 is closed. With the help of vacuum gauge 18, the rate of gas/air inflow into evacuated weld joint 2 is measured. Airtightness of preliminary insulation of weld joint 2 is checked. Upon completion of such airtightness check, evacuation is resumed. Then, with vacuum pump 13 turned on, valve 17 connecting vacuum reservoir 11 to tank 12 with sealant material 10 is opened. Under the effect of vacuum, sealant material 10 is fed to vacuum reservoir 11. Once vacuum reservoir 11 is filled with sealant material 10 to a preset level, valve 17 for feeding the sealant material is closed. When doing so, no air inflow to the vacuum reservoir via valve 17 is allowed. Under gravity and the capillary effect, sealant material 10 fills the pre-evacuated cavities and gaps around weld joint 2 being insulated. The level of liquid sealant material 10 in vacuum reservoir 11 gradually lowers. Once the level of sealant material 10 in vacuum reservoir stops changing, the pumping is turned off and vacuum is broken. As a result, atmospheric pressure starts acting upon the liquid material and thereby sealant material 10 is squeezed into microscopic gaps of the annular cavity of the weld joint being insulated. In exceptional circumstances, for instance, in the case of defective preliminary insulation of the annular gaps along liner 5 butts, compressed air is charged, via valve 15, to vacuum reservoir 11 after vacuum is broken. It allows to ensure penetration of sealant material 10 into the minutest gaps, micro-cracks etc. At the final stage, outgoing inspection of the airtightness of weld joint 2 insulation is performed by means of evacuation, shutoff of the line connecting to vacuum pump 13, and assessment of the rate of gas/air inflow into vacuum reservoir 11. Once the checking is completed, process hole 8 is sealed off.

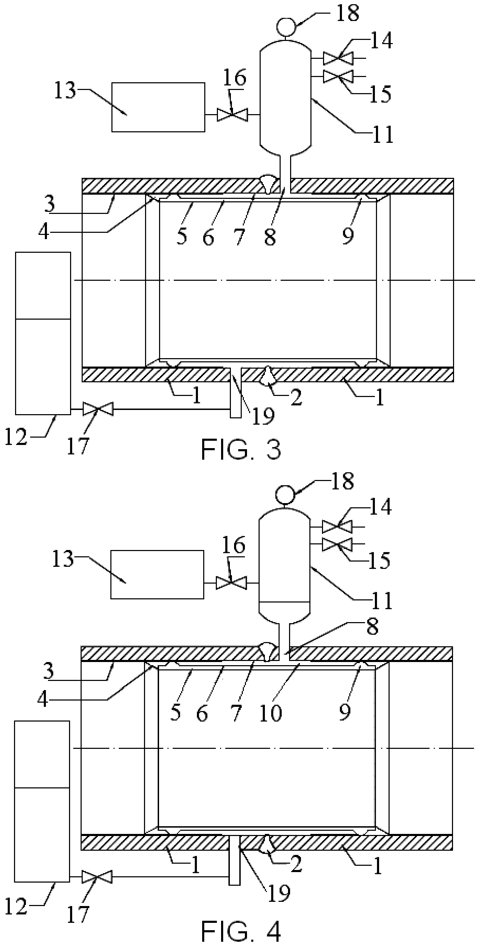

When using the vacuum infusion method for injection of sealant material 10 (see Figs. 3 and 4), at least two process holes are made in the zone of weld joint 2 - one hole 8 above pipe 1 and second hole 19 in the bottom part of pipe 1. Vacuum reservoir 11 is connected to upper process hole 8 of the weld joint. Tank 12 with sealant material 10 is connected, by means of a hose and shutoff valve 17, to lower process hole 19.

Through upper process hole 8, vacuum is achieved in annular gaps and cavity of the joint with the help of vacuum pump 13. For some time, valve 16 that connects vacuum reservoir 11 to vacuum pump 13 is closed. With the help of vacuum gauge 18, the rate of gas/air inflow into evacuated weld joint 2 is measured. Airtightness of prior insulation of weld joint 2 is determined. Upon completion of such airtightness check, evacuation is resumed. Then, with vacuum pump 13 turned on, lower valve 17 connecting lower process hole 19 of the weld joint with lower tank 12 with sealant material 10 is opened. Under the effect of vacuum, sealant material 10 from lower tank 12 is fed to the annular cavity and gaps. Under gravity, at first the lower part of the cavity and gaps is filled. Upon impregnation/filling of the entire volume of cavity and gaps in the evacuated weld joint by the sealant material, the fluid starts filling upper vacuum reservoir 11. At this moment, lower valve 17 for delivery of the liquid sealant material is closed. The valve connecting upper vacuum reservoir 11 to vacuum pump 13 is closed. Airtightness of insulation is checked through measuring the rate of gas/air inflow. Vacuum is broken in upper vacuum reservoir 11. Atmospheric pressure exerts influence upon liquid sealant material 10 in the upper vacuum reservoir, thereby ensuring the filling of micro-cracks and other defects in the cavity and gaps of the welded joint to be insulated. If necessary, excessive pressure is created in upper vacuum reservoir 11, which ensures penetration of liquid sealant material into micro-cracks and discontinuity flaws (according to results of some studies, under vacuum impregnation conditions, liquid sealant material 10 penetrates into micro-cracks less than 50 to 70 nm). Process holes 8 and 19 are sealed off. After the vacuum infusion, practically no voids or non-impregnated areas in the space between liner 5 and inside surface 7 of the pipeline's weld joint being insulated are left. Liquid sealant material 10 polymerizes. As a result, an airtight monolithic joint of outer surface 6 of liner 5 with inside surface 7 of the pipeline joint being insulated is formed, which averts penetration of the medium (to be transported via the pipeline) to within the weld joint area.

In another embodiment of the method, reinforcing material, well impregnable and resistant to corrosive environments, e.g. glass fabric, is placed onto the central area of liner 5 between said annular projections 9. After polymerization of liquid sealant material 10 that impregnated the reinforcing material, the so-formed reinforced monolithic block is converted into a very firm joint. In accordance with this embodiment, liner 5 can be made of either stainless steel or ordinary carbon steel practically without any loss in reliability of welded-joint insulation since polymerized impregnating material 10 reinforced with strong material resistant to corrosive environments is capable of ensuring a high-quality insulation of the welded joint even after penetration corrosion of steel liner 5. Also, such liner 5 can be made of thin-wall (0.1 to 2.0mm) steel as its flexure under vacuum conditions does not exercise critical effect on the condition of the gaps and the final quality of welded-joint insulation. All the above allows ensuring economic insulation of such welded joints without any harm to reliability of inside insulation of the welded joint.

When sealing the annular gaps along liner 5 butts, the reinforcing material prevents the thixotropic sealant from penetration into the inner annular cavity between pipes 1 and liner 5, thereby securing the optimal conditions for preliminary sealing. In the process of impregnation, liquid sealant material 10, exposed to vacuum conditions, penetrates without any serious barriers, through the reinforcing material to impregnate the entire annular cavity of the joint being insulated. After polymerization of the liquid sealant, the produced reinforced monolithic block grows into a very firm joint. In the course of evacuation, the reinforcing material prevents the liner wall from flexure, as well as the weld joint cavity from collapse. It ensures a uniform gap of the cavity to be sealed off.

Also, the proposed method can be implemented using annular cushion 20. In Figs. 9 and 10, annular cushions are presented with point-like projections (Fig.9) or intermittent reinforcement ribs (Fig.10) on the inside surface of the cushion. Annular cushion 20 is positioned at the center of protective liner 5 (Fig.11), on its outer surface. After the mounting, the outer surface of annular cushion 20 abuts on the surface of pipes 1 to be joined and covers the gap between them. In the process of welding of the joint root, annular cushion 4 averts uncontrolled outflow of liquid metal from the molten pool, thereby preventing thin-wall protective liner 5 from a burn-through by molten metal or welding arc. Projections 21 on the inside surface of annular cushion 20 rest against the outer surface of protective liner 5. The area of contact between annular cushion 20 and protective liner 20 is several times lower than the inside surface of annular cushion 20. As a result, the thermal flux from annular cushion 20 to protective liner 5 also declines by several times. Additionally, local projections 21 on annular cushion 20 provide a guaranteed gap 22 between annular cushion 20 and protective liner 5, which allows liquid sealant material 10 to fill without obstruction all cavities and gaps of the weld joint being insulated.

As the sealant material, two-component adhesives can be employed, e.g. epoxy or polyurethane resins. Polymerization of such resins takes a period of time depending on the temperature. Therefore, when performing the sealing of welded joints in winter, one may have to provide local heating of insulated joints to ∼10-20 °C. To accelerate the polymerization process, the warm-up temperature can be increased in accordance with the specifications for the sealant in use. Once polymerization of the liquid sealant compound is complete, a sealed-off monolithic assembly is formed, which precludes any penetration of corrosive media being transported via the pipeline to the ferrous metal of the joint. Monolithic insulation of a weld joint in conformity with the method proposed is efficient practically at any permissible pipeline pressures, up to 200 MPa.

Below, a specific embodiment of the proposed method is provided.

Pipes 1 to be joined have the nominal outer diameter of 219 mm, internal diameter of 207 mm, and wall thickness of 6 mm.

Inside protective coating 3 is of epoxy type, the indent of coating 3 from the pipe 1 edge is 50 mm (the thickness of coating in the non-protected part of the pipe is 300 µm).

In its initial condition, stainless steel liner 5 had the shape of a regular cylinder with two alignment petals welded in the center of liner 5 with short weld joints. The outer diameter of the protective liner was 198 mm, wall thickness was 1.00 mm. The liner width was 200 mm.

Vacuum was created with the help of rotary vane pre-evacuation pump 13 (Busch R5).

Vacuum was measured by with the help of a Testo 552 vacuum gauge.

The preliminary operations were performed as follows. Actual inner perimeters of pipe ends of pipes 1 to be joined were measured. For this purpose, a steel cone made of thin sheet steel 0.5 mm was used. The cone had a scale, namely, circular lines on the outer surface. These circular lines are gauged. On the basis of perimeters of both pipes 1 to be joined, the actual nominal inner diameter was determined with adjustment for ellipticity of pipes 1. The first pipe 1 had the outer diameter equal to 214 mm, the inner one, 202 mm, and the wall thickness, 6 mm. The second pipe 1 had the outer diameter equal to 217 mm, and the inner one, 205 mm. The actual nominal diameter of pipes 1 to be joined was calculated taking the protective coating thickness into account. The first pipe had the inner diameter (with the coating) equal to 201.4 mm. For the second pipe, this value was 204.4 mm. Their actual inner diameters were written down with a chalk on the outer surface of the pipes. The mounting gap was taken equal to 0.4mm. The maximal outer diameters of protective liner 5 ends were determined with reference to annular projections 9 - 201 and 204 mm respectively. On a W6 retrofitted mobile hydraulic expansion machine (Hornung company, Germany), both end parts of pipes 1 were shaped in field conditions. The total time of shaping of both ends of protective liner 5 (with adjustment for setting required geometric parameters) was 30 sec. The accuracy of the shaping was 0.1 mm. At both ends of liner 5, on its outer surface, the maximal diameters determined by annular projections 9 (201 and 204 mm respectively) were written down with a chalk.

Welded joint 2 (Fig.1) of steel pipes 1 with inside protective coating 3 was sealed off as follows in accordance with the method proposed herein.

In the upper part of the fixed pipe, at a distance of 20 mm from its end, process hole 8 with a diameter of 5 mm was made. Hole 8 was threaded (M6). An adapter for connection of a hose was mounted on tacks to hole 8 at the outer surface of pipe 1. The hole of the adapter was closed with a steel plug. Inside surfaces of pipes 1 to be joined were blown with compressed air and wiped clean with a rag. The depth of treatment of both ends reached 120 mm. Then, with the help of a metal brush, products of corrosion were removed from the inside surface areas being treated. Inside surfaces of pipe 1 were blown once again. Onto inside coating 3 of end parts of pipes 1 (at a distance of 85 mm from both parts of the ends being joined), thixotropic sealant material (LEO QUARTZ metal-filled polymer) was applied in the form of continuous annulus 4 along the whole perimeter of pipe 1. Liner 5 with two annular projections 9 at its ends was placed coaxially inside fixed pipe 1 with an actual inner diameter of 201.4 mm. This being the case, some part of protective liner 5 with the maximal diameter of 201 mm was pushed into first pipe 1. Liner 5 was gently pushed in the pipe to two petals (stops) welded there. Annular projection 9 at the edge of liner 5 replaced thixotropic sealant 4 in pipe 1 along the movement of liner 5 and sealed off the first edge of liner 5. The stopping petals of liner 5 were welded (optionally, they can be soldered) to the butt of pipe 1. Then, with the help of lifting gear, second pipe 1 was mounted. When doing so, second pipe 1 was pushed smoothly until the contact to liner 5 stops. The second edge of liner 5 was sealed off by sealant annulus 4 inside second pipe 1. The gap between inside surfaces of pipes 1 being joined and the adjusted outer surface of both parts of liner 5 was 1.5 mm per side. After that, the joint of pipes 1 was welded (manual arc welding). Once the metal cooled down, the connection between the process hole adapter and the pipe was sealed off with thixotropic sealant. 24 hours later, the weld joint was sealed off using the vacuum impregnation method in accordance with the diagram displayed in Fig.1. Vacuum reservoir 11 of the impregnation machine was connected to the adapter with the help of a vacuum hose. Liquid sealant (viz., RAKU-TOOLEL-2203/EH-2970-1 resin) in the amount of 500 ml was prepared (mixed). The so-prepared resin was poured into reservoir 12 for the sealant material mounted on the impregnation machine. Busch R5 vacuum pump 13 was turned on. The cavity around weld joint 2 was evacuated by opening valve 16 (Fig.1). Within 30 sec, the absolute pressure at vacuum gauge 18 reached 1.0 mbar. In two minutes, valve 16 was closed and the airtightness of the weld joint was checked. The pressure in the weld joint being insulated was monitored. Readings of gauge 18 did not change for five minutes. The preliminary sealing-off of the joint was performed with a good quality. Valve 16 was opened and weld joint 2 was evacuated to a deeper vacuum. In a minute, the resin was fed to vacuum reservoir 11 by means of opening valve 17. Vacuum reservoir 11 was filled with the resin in the amount of ∼300 ml. The line for delivery of resin to vacuum reservoir was shut off. Visual monitoring of the resin level was performed via the viewport in vacuum reservoir 11. The level of resin in reservoir 11 came to a stable state within two minutes. In a minute after the level of resin in vacuum reservoir 11 became stable, evacuation valve 16 was closed. Vacuum in reservoir 11 was broken by a short-time opening of valve 14. Compressed air with an overpressure of 1 bar is supplied to vacuum reservoir 11. Two minutes later, the supply of compressed air was closed and the system was evacuated to 1.0 mbar. The evacuation line was shut off by valve 16. The airtightness of the weld joint was checked. Readings of the vacuum gauge did not change for 5 minutes. The joint was sealed off reliably. Vacuum in reservoir 11 was broken and the equipment was turned off. At process hole 8, the tacks on the adapter were removed with the help of a hammer and a chisel, after which the adapter was removed. Process hole 8 was sealed off with resin and a steel screw (M6). Polymerization of sealant material 10 was achieved through natural solidification.

The group of inventions claimed herein streamlines the technology for insulation of welded joints of pipelines, which reduces the impact of human factor upon the quality of weld joint insulation, enhances essentially the reliability and service life of such insulation, reduces the material consumption of associated operations, diminishes the effect of inner geometry violations, in particular, out-of-roundness of pipes, upon the quality and laboriousness of pipeline weld joint insulation, reduces the hydraulic resistance of the pipeline owing to enhanced flow area of insulated weld joints, allows the use of an easy and reliable method for controlling the airtightness of pipeline weld joint insulation, allows inside insulation of hard-to-reach weld joints, curtails the pipeline construction time due to eliminated impact of the progress of work associated with weld joint insulation upon the possibility to assemble and weld further pipes and strings, eliminates the negative effect of burrs and icicles that appear in the course of welding upon the quality of pipeline weld joints, allows insulating weld joints of pipelines with arbitrary inside protective coating and arbitrary diameter.

## Claims

1. Method for inside anti-corrosion protection of welded joints of pipes (1) with an interior protective coating (3), which comprises:
placement of a protective liner (5) coaxially inside the pipes (1) to be joined, with formation of an annular cavity between the outer surface (6) of the liner (5) and the inside surface (7) of the weld joint (2) of the pipes (1) to be insulated with adjacent coating-protected areas;
welding of the pipe ends;
sealing-off of the annular cavity at liner edges;
filling of the annular cavity with a liquid sealant agent (10) via at least one process hole (8) in one or both pipes (1) with subsequent polymerization of the agent,
***characterized in that,*** prior to the placement of the protective liner (5), it is plastically deformed by means of expanding the liner parts to ensure matching the shape and internal diameter of each part of the liner (5) to the shape and internal diameter of the opening of respective pipe (1) in the area of the joint (2), taking into account the mounting gap between them and the thickness of the inside protective coating (3), and
the placement of the protective liner (5) is effected in the form of inserting one part of the liner (5) into one pipe (1) until it gets rested against a sealant (4) applied onto the inside surface of the first pipe (1), and
then pushing the second pipe (1) onto the other part of the protective liner (5) until it gets rested against a sealant on the inside surface of the second pipe (1).

2. Method according to claim 1, **characterized in that** the annular cavity is filled with a liquid sealing material (10) by means of evacuating the annular cavity followed by feeding said material (1) therein, and then exposing said material to the effect of atmospheric or excess pressure.

3. Method according to claim 1, **characterized in that** when placing the protective liner (5), in between the protective liner (5) and the weld joint (2) a steel annular cushion (20) is arranged, which contacts with its outer surface to the weld joint (2) surface and has projections (21) on its inside surface that are in contact with the outer surface of the protective liner, and when welding pipe ends, they are welded to the steel annular cushion.

4. Method according to claim 1, **characterized in that** the protective liner (5) has annular projections (9) on the outer surface of its end parts.

5. Method according to claim 1, **characterized in that** in the course of the plastic deformation of the liner (5) annular projections (9) on the outer surface of its end parts are formed.

6. Method according to claim 4 or 5, **characterized in that**, prior to the placement of the protective liner (5), a reinforcing, well impregnable material resistant to corrosive environments is applied onto the liner's outer surface in between the annular projections.

7. Method according to claim 1, **characterized in that** the airtightness of weld joint insulation is checked both prior to and after the filling of the annular cavity with the liquid sealant material (10) by means of evacuation and subsequent assessment of the rate of air/gas leakage into the annular cavity.

8. Method according to claim 1, **characterized in that** the protective liner (5) is made of stainless steel and has a wall thickness ranging from 0.1 to 6.0 mm.

## Patentansprüche

1. Verfahren zum Antikorrosionsschutz auf der Innenseite von Schweißverbindungen von Rohren (1) mit einer Innenschutzbeschichtung (3), welches aufweist:
Platzierung einer Schutzauskleidung (5) koaxial innerhalb der zu verbindenden Rohre (1) unter Bildung eines ringförmigen Hohlraums zwischen der Außenfläche (6) der Auskleidung (5) und der Innenfläche (7) der Schweißverbindung (2) der zu isolierenden Rohre (1) mit angrenzenden beschichteten Schutzbereichen;
Schweißen der Rohrenden;
Abdichten des ringförmigen Hohlraumes an den Kanten der Auskleidung;
Füllen des ringförmigen Hohlraumes mit einem flüssigen Dichtmittel (10) mittels zumindest einem Bearbeitungsloch (8) in einem oder beiden Rohren (1) mit anschließender Polymerisation des Mittels,
**dadurch gekennzeichnet,**
**dass** vor der Platzierung der Schutzauskleidung (5) dieser mittels einer Ausweitung der Teile der Auskleidung plastisch deformiert wird, um eine Anpassung der Form und des inneren Durchmessers jedes Teils der Schutzauskleidung (5) an die Form und den inneren Durchmesser der Öffnung des jeweiligen Rohrs (1) im Bereich der Verbindung (2) unter Berücksichtigung des Montageabstandes zwischen ihnen und der Dicke der inneren Schutzbeschichtung (3) zu gewährleisten, und
die Platzierung der Schutzauskleidung (5) in Form des Einsetzens eines Teils der Schutzauskleidung (5) in das eine Rohr (1) erfolgt, bis diese gegen ein Dichtmittel (4) anliegt, das auf der Innenfläche des ersten Rohres (1) aufgetragen ist, und
dann das zweite Rohr (1) auf den anderen Teil der Schutzauskleidung (5) schieben, bis diese gegen ein Dichtmittel auf der Innenfläche des zweiten Rohres (1) anliegt.

2. Verfahren nach Anspruch 1,
**dadurch gekennzeichnet,**
**dass** der ringförmige Hohlraum mittels Evakuierens des ringförmigen Hohlraums gefolgt von Hineinfüllen eines Materials (1) mit einem flüssigen Abdichtmaterial (10) gefüllt wird, und dieses Material dem Effekt der Atmosphäre oder von Überschussdruck ausgesetzt wird.

3. Verfahren nach Anspruch 1,
**dadurch gekennzeichnet,**
**dass** beim Platzieren der Schutzauskleidung (5) zwischen der Schutzauskleidung (5) und der Schweißverbindung (2) ein stählerneres ringförmiges Kissen (20) angeordnet wird, welches mit seiner äußeren Oberfläche die Oberfläche der Schweißverbindung (2) kontaktiert und Vorsprünge (21) auf seiner inneren Oberfläche besitzt, die in Kontakt mit der äußeren Oberfläche der Schutzauskleidung stehen, und dann, wenn die Enden der Rohre geschweißt werden, diese mit dem stählernen ringförmigen Kissen verschweißt werden.

4. Verfahren nach Anspruch 1,
**dadurch gekennzeichnet,**
**dass** die Schutzauskleidung (5) ringförmige Vorsprünge (9) auf der äußeren Oberfläche ihrer Endstücke hat.

5. Verfahren nach Anspruch 1,
**dadurch gekennzeichnet,**
**dass** im Verlauf der plastischen Deformation der Schutzauskleidung (5) ringförmige Vorsprünge (9) auf der äußeren Oberfläche ihrer Endstücke gebildet werden.

6. Verfahren nach Anspruch 4 oder 5,
**dadurch gekennzeichnet,**
**dass** vor der Platzierung der Schutzauskleidung (5) ein verstärkendes, gut imprägnierbares gegenüber korrosiven Umgebungen widerstandsfähiges Material zwischen die ringförmigen Vorsprünge auf der äußeren Oberfläche der Schutzauskleidung aufgetragen wird.

7. Verfahren nach Anspruch 1,
**dadurch gekennzeichnet,**
**dass** die Luftdichtigkeit der Schweißverbindungsisolierung sowohl vor als auch nach dem Füllen der ringförmigen Hohlräume mit dem flüssigen Abdichtmaterial (10) mittels des Evakuierens und anschließenden Einleitens einer Rate von Luft oder Gasleckage in die ringförmigen Hohlräume überprüft wird.

8. Verfahren nach Anspruch 1,
**dadurch gekennzeichnet,**
**dass** die Schutzauskleidung (5) aus rostfreiem Edelstahl hergestellt ist und eine Wanddicke in dem Bereich zwischen 0,1 und 6,0 mm besitzt.

## Revendications

1. Procédé de protection anticorrosion intérieure de joints soudés de tuyaux (1) avec un revêtement protecteur intérieur (3), qui comprend :
le placement d'une doublure protectrice (5) coaxialement à l'intérieur des tuyaux (1) à joindre, avec la formation d'une cavité annulaire entre la surface externe (6) de la doublure (5) et la surface intérieure (7) du joint de soudure (2) des tuyaux (1) à isoler avec des zones protégées par revêtement adjacentes ;
le soudage des extrémités de tuyau ;
le colmatage de la cavité annulaire au niveau de contours de doublure ;
le remplissage de la cavité annulaire avec un agent de colmatage liquide (10) via au moins un trou de procès (8) dans l'un des tuyaux (1) ou les deux avec une polymérisation ultérieure de l'agent,
**caractérisé en ce que**, avant le placement de la doublure protectrice (5), celle-ci est déformée plastiquement en dilatant les parties de doublure pour garantir la concordance de la forme et du diamètre interne de chaque partie de la doublure (5) à la forme et au diamètre interne de l'ouverture d'un tuyau (1) respectif dans la zone du joint (2), en tenant compte de l'écartement de montage entre eux et de l'épaisseur du revêtement protecteur intérieur (3), et
le placement de la doublure protectrice (5) se fait par l'insertion d'une partie de la doublure (5) dans un tuyau (1) jusqu'à ce qu'elle vienne reposer contre un colmatant (4) appliqué sur la surface intérieure du premier tuyau (1), et
ensuite, par la poussée du second tuyau (1) sur l'autre partie de la doublure protectrice (5) jusqu'à ce qu'elle vienne reposer contre un colmatant sur la surface intérieure du second tuyau (1).

2. Procédé selon la revendication 1, **caractérisé en ce que** la cavité annulaire est remplie d'un matériau de colmatage liquide (10) par l'évacuation de la cavité annulaire suivie de l'apport dudit matériau (1) à l'intérieur, puis par l'exposition dudit matériau à l'effet de la pression atmosphérique ou d'un excédant de pression.

3. Procédé selon la revendication 1, **caractérisé en ce que**, lors du placement de la doublure protectrice (5), entre la doublure protectrice (5) et le joint de soudure (2) un coussin annulaire en acier (20) est agencé, qui vient en contact avec sa surface externe avec la surface du joint de soudure (2) et comporte des saillies (21) sur sa surface intérieure qui sont en contact avec la surface externe de la doublure protectrice, et lors du soudage d'extrémités de tuyau, elles sont soudées au coussin annulaire en acier.

4. Procédé selon la revendication 1, **caractérisé en ce que** la doublure protectrice (5) comporte des saillies annulaires (9) sur la surface externe de ses parties d'extrémité.

5. Procédé selon la revendication 1, **caractérisé en ce qu'**au cours de la déformation plastique de la doublure (5), des saillies annulaires (9) sur la surface externe de ses parties d'extrémité sont formées.

6. Procédé selon la revendication 4 ou 5, **caractérisé en ce que**, avant le placement de la doublure protectrice (5), un matériau bien imprégnable de renforcement résistant à des environnements corrosifs est appliqué sur la surface externe de la doublure entre les saillies annulaires.

7. Procédé selon la revendication 1, **caractérisé en ce que** l'étanchéité à l'air d'une isolation de joint de soudure est vérifiée à la fois avant et après le remplissage de la cavité annulaire avec le matériau de colmatage liquide (10) par l'évacuation et l'estimation ultérieures du taux de fuite d'air/de gaz dans la cavité annulaire.

8. Procédé selon la revendication 1, **caractérisé en ce que** la doublure protectrice (5) est réalisée en acier inoxydable et a une épaisseur de paroi allant de 0,1 à 6,0 mm.
